# EUROPEAN PATENT APPLICATION

(11) **EP 1 753 117 A2**
(43) Date of publication of application: **14.02.2007**
(21) Application number: 06016141.1
(22) Date of filing: 02.08.2006
(51) Int. Cl.: H02M 3/07

(54) **Power supply apparatus**

(30) Priority: 02.08.2005 CN 200510088483
(71) Applicant: BEELAB Semiconductor Ltd., Central, Hong Kong SAR (CN)
(72) Inventor: NG, Shek-Wai, Beelab Semiconductor Ltd., 99 Des Voeux Road, Central (HK)
(74) Representative: Thomson, Neil David

(57) **Abstract**

The invention relate to a power supply apparatus operating on the charge pump principle, comprising multiple regulators and three boosting capacitors switched in a switch matrix consisting of nine switches. A control circuit is provided capable of controlling the switches so that the charge pump is changed over between charging phases and discharge phases and which is capable of operating the charge pump in different voltage gains (1; 4/3; 3/2; 5/3; 2). The invention comprises furthermore a mode transitioning system. The selection of a mode is based on comparators capable of comparing signals from current regulation elements to predetermined voltages and then when the former attains the latter, changing over the charge pump into the corresponding other mode, wherein the predetermined voltages are selected so that the efficiency of the converter is optimized.

## Description

### FIELD OF INVENTION

The present invention relate generally to charge pump power supplies for electronic systems, and more particularly to a high efficiency charge pump and its operation, which are commonly used in such power supplies, by controlling the transitioning of such charge pumps between multiple modes of operation.

### BACKGROUND OF INVENTION

In many portable electronic products, LED (Light Emitting Diode) elements are used as backlight for an LCD (Liquid Crystal Display) or a flash light for the attached camera and a battery is used as the power source. To drive the LED elements, the battery voltage, ranged from 3V-4.2V, must be stepped up to the LED voltage, ranged from 3.0V-4V. A charge pump circuit is commonly used as a power supply apparatus to provide the step up function. Because of the fixed step-up gain of a charge pump, the output voltage is always higher than the necessary drive voltage. Therefore, a regulator or ballast resistor is needed to adjust the LED current or the drive voltage to the desired value. Therefore, power is lost in the regulator or the ballast resistor.

To improve the efficiency of the power supply apparatus, there are various proposals to adjust the step-up gain of the charge pump to minimize the power loss. Described in US patent 2005/0047181A1, 6055168, 6226193, 6512411, MAX1576 from Maxim Integrated Product and LTC3215 from Linear Technology are examples of charge pump systems which are able to dynamically adjust their gain between 1, 3/2 and 2 to improve the average efficiency.

However, there are numerous deficiencies in these prior arts. The wide difference in the selectable gain means the worst case efficiency can be as low as 50% or worst. For example, when the desired LED voltage is 3.7V and the battery voltage is 3.7V, a gain of 3/2 must be used. The efficiency in this example is 66% only.

The charge pump in US patent 6055168 is capable of providing a gain of 4/3, but it uses a total of 14 switches to realize the functions. This renders the system expensive to be realized as an integrated circuit because the wires needed to connect all switches and capacitors will occupy too much area. Hence the charge pump in US patent 6055168 is not an appropriate commercial LED backlight power supply solution because the extra efficiency does not justify the extra cost incurred.

The automatic mode transition systems described in prior art US2005/0047181, MAX1576 and LTC3215 are only optimum for an assumed LED load current. When the actual load current is smaller than the assumed value, the system will switch to a high gain mode too soon. When the actual load current is bigger than the assumed value, the switchover will be too late. Therefore the worst cases, largest load current and worst manufacturing tolerance, must be assumed and thus the efficiency of the power supply cannot be optimum for all range of load current and battery voltage.

Accordingly, what are needed are further improved and commercial viable systems, apparatus, and methods for providing much efficient and optimized multiple mode charge pumps. Furthermore, the system is to be implemented using widely understood and economical integrated circuit digital logic process.

### SUMMARY OF INVENTION

Accordingly, the objective of the present invention is to provide an efficient multiple mode charge pump based power supply apparatus which can be realized inside an integrated circuit with no extra cost.

Another object of the invention is to provide a transitioning system for multiple mode operation of charge pumps which works efficiently across a wide range, and preferably the total range, of appropriate output loads likely to be encountered by particular circuits employing the charge pumps.

Another object of the invention is to provide a transitioning system for multiple mode operation of charge pumps which maintains high efficiency and high output current capability consistently.

And another object of the invention is to provide a system for multiple mode operation of charge pumps which transit automatically between such modes in a manner supplying high efficiency or high output current, as may be appropriate for particular output loads.

Briefly, a preferred embodiment of the present invention is a charge pump with current regulators and a mode transition system. The charge pump includes a switch timing control circuit which produces control signals according to the mode selected and a number of boosting capacitors which are charged during first half clock cycle and discharged during the other half clock cycle. The charge pump is capable of providing a set of finely divided gains (1; 4/3; 3/2; 5/3; 2) such that the output voltage can be better fitted to the desired load voltage or current and minimize the power loss in the regulator by selecting the appropriate gain.

The mode transitioning system is capable of automatic transition and selection of the gain of the charge pump to minimize the power loss in the regulator and maximize the efficiency of the system. The current regulators maintain the current of the LED currents to a preset value. The regulators also output signals which, after further processing, may indicate whether the output voltage of the charge pump is excessive, adequate or inadequate. The signals are compared with predetermined levels and signals are generated accordingly to adjust the gain of the charge pump to minimize the power loss of the said regulators.

An advantage of the present invention is that it provides an efficient, automatically operating transitioning system for multiple mode operation of a charge pump, one able to accommodate a full range of charge pump input conditions and output loads. When a gain of 4/3 can be selected, there is an 11% improvement in efficiency over the use of a gain of 3/2. When a gain of 5/3 can be selected, there is a 17% improvement in efficiency over the use of a gain of 2.

Another advantage of the present invention is that it may be largely monolithically implemented. The invention may be incorporated into monolithic integrated circuit type charge pump designs without the need for additional discrete components or resorting to non-monolithic assemblies. The layout of the switches in an integrated circuit incurred no extra area in comparison with prior arts which have gains of 1, 3/2 and 2 only because the same number of switches is used. Hence the present invention is commercially viable. Yet the invention may also use discrete components or non-monolithic assemblies, or be integrated into charge pump designs which use such for other purposes, if a designer so wishes.

Another advantage of the present invention is that a switch between two of the three capacitors is eliminated. Thus, the power loss during the charging phase is smaller and the efficiency of the present invention is further improved over the prior art without penalty.

Another advantage of the present invention is that the maximum voltage inside the circuit is still within the operational limit of digital integrated circuits such that the circuit may be implemented using widely understood and economical integrated circuit digital logic process.

Another advantage of the present invention is that the mode transition is always optimum for all range of input voltage and load current and load voltage and tolerance in all elements.

These and other objects and advantages of the present invention will become clear to those skilled in the art in view of the description of the best presently known mode of carrying out the invention and the industrial applicability of the preferred embodiment as described herein and as illustrated in the several figures of the drawings.

### BRIEF DESCRIPTION OF DRAWINGS

FIG. 1 illustrates a structure of a power supply according to the present invention.
FIG. 2 illustrates a structure of a charge pump circuit shown in FIG. 1 according to a first embodiment of the present invention.
FIG 3 illustrates ON/OFF states of switches S 1 to S9 when the gain of charge pump circuit shown in FIG 2 is set to 1.
FIG 4A, FIG 4B and FIG 4C illustrates ON/OFF states of switches S 1 to S9 during charging phase P2/1 and discharging phases P2/2 and P2/3 when the gain of charge pump circuit shown in FIG 2 is set to 4/3.
FIG 4D illustrates the repeating sequence of charging phase P2/1 and discharging phases P2/2 and P2/3.
FIG. 5A and FIG. 5B illustrates ON/OFF states of switches S 1 to S9 during charging phase P3/1 and discharging phase P3/2 when the gain of charge pump circuit shown in FIG 2 is set to 3/2.
FIG. 5C illustrates the repeating sequence of the charging phase P3/1 and discharging phase P3/2.
FIG 6A, FIG 6B, FIG 6C and FIG. 6D illustrates ON/OFF states of switches S 1 to S9 during charging phase P3/1 and discharging phases P4/2, P4/3, and P4/4 when the gain of charge pump circuit shown in FIG. 2 is set to 5/3.
FIG 6E illustrates the repeating sequence of charging phase P3/1 and discharging phases P4/2, P4/3 and P4/4 .
FIG. 7A and FIG. 7B illustrates ON/OFF states of switches S 1 to S9 during charging phase P5/1 and discharging phase P5/2 when the gain of charge pump circuit shown in FIG. 2 is set to 2.
FIG 7C illustrates the repeating sequence of the charging phase P5/1 and discharging phase P5/2.
FIG. 8 illustrates a structure of a current regulator circuit shown in FIG. 1.
FIG. 9 illustrates a structure of a automatic mode transition system shown in FIG. 1 according to an embodiment of the present invention.
FIG. 10 illustrates a structure of the Analog-AND circuit shown in FIG 1 according to an embodiment of the present invention.
FIG. 11 illustrates a structure of the Analog-OR circuit shown in FIG. 1 according to an embodiment of the present invention.
FIG 12A illustrates a structure of the mode transition system shown in FIG 1 according to an embodiment of the present invention.
FIG 12B illustrates another structure of the mode transition system shown in FIG. 1 according to an embodiment of the present invention.
FIG 13 illustrates another structure of a charge pump circuit in FIG. 1 according to a second embodiment of the present invention.
FIG. 14 illustrates ON/OFF states of switches S 1 to S9 when the gain of charge pump circuit shown in FIG 12 is set to 1.
FIG 15A, FIG. 15B and FIG 15C illustrate ON/OFF states of switches S1 to S9 during charging phase P2/1 and discharging phases P2/2 and P2/3 when the gain of the charge pump circuit shown in FIG. 13 is set to 4/3.
FIG 16A and FIG 16B illustrate ON/OFF states of switches S 1 to S9 during charging phase P3/1 and discharging phase P3/2 when the gain of the charge pump circuit shown in FIG. 12 is set to 3/2.
FIG. 17A and FIG 17B illustrate ON/OFF states of switches S 1 to S9 during charging phase P5/1 and discharging phase P5/2 when the gain of the charge pump circuit shown in FIG 12 is set to 2.

### DETAILED DESCRIPTION OF THE PREFERRED EMBODIMENT

The invention will now be described by the following embodiments. These embodiments are not intended to limit the scope of the present invention but are to demonstrate the invention only. All features and combinations described in the embodiments are not necessarily essential to the invention.

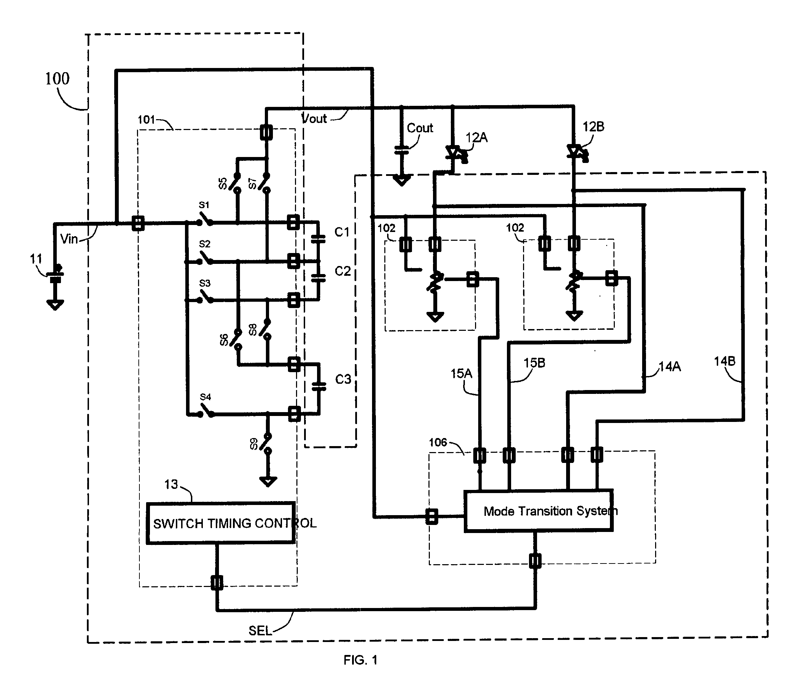

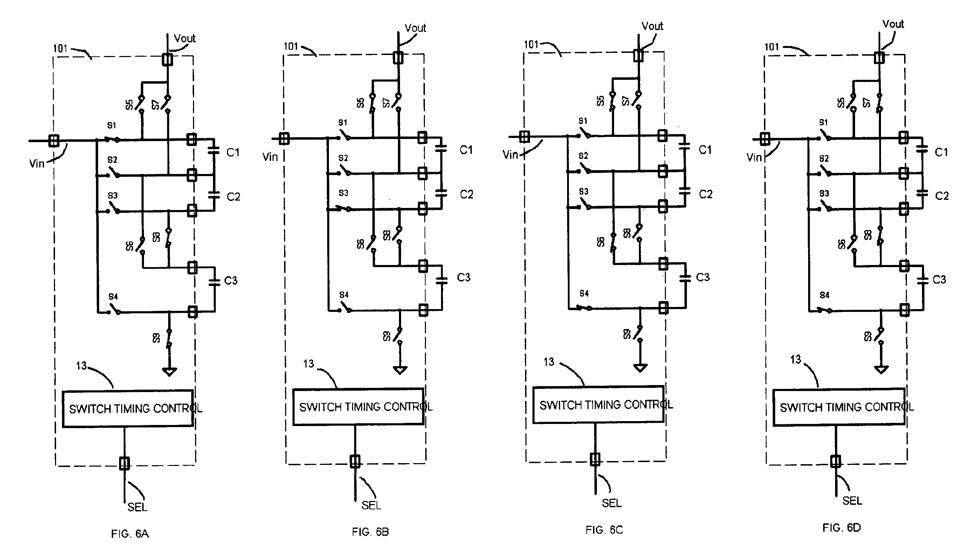

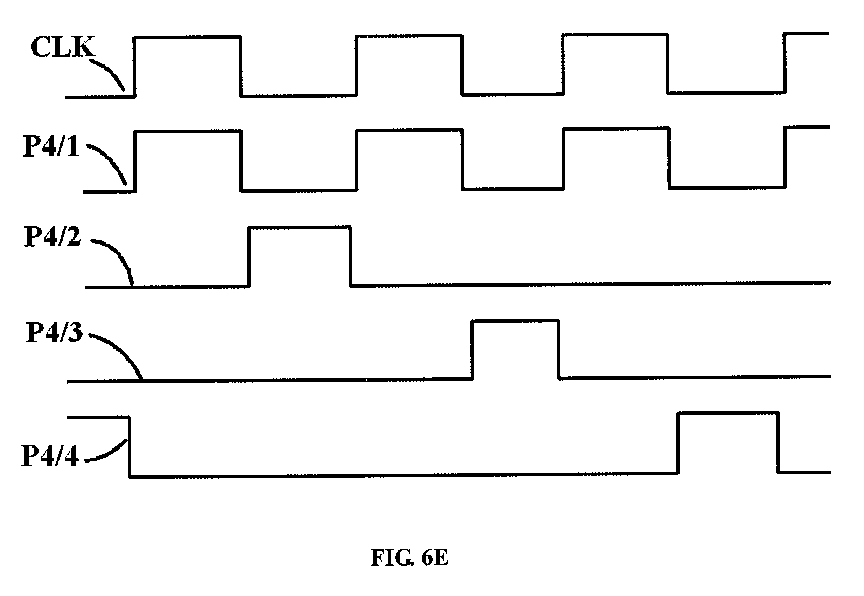

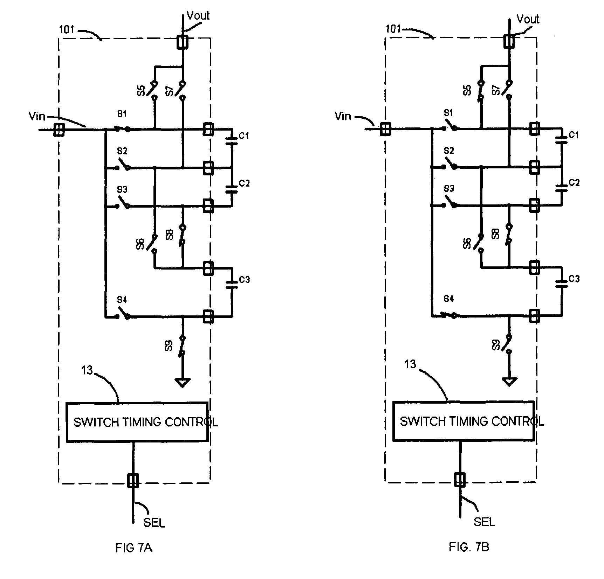

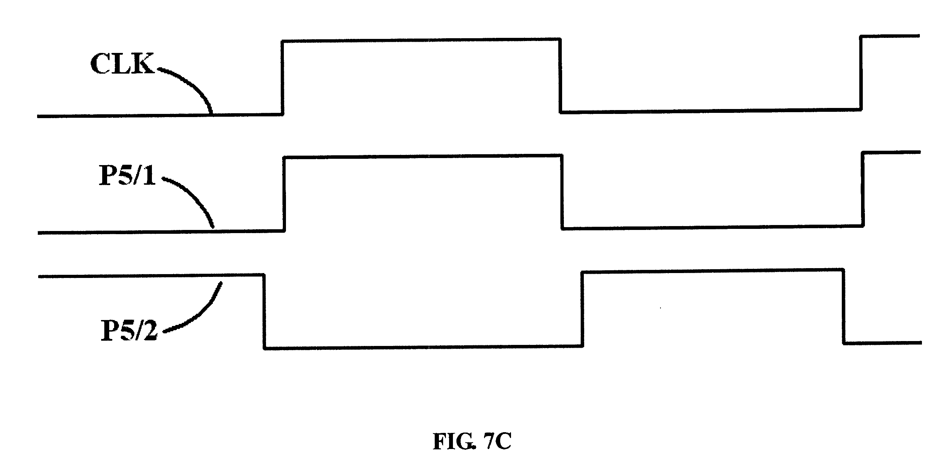

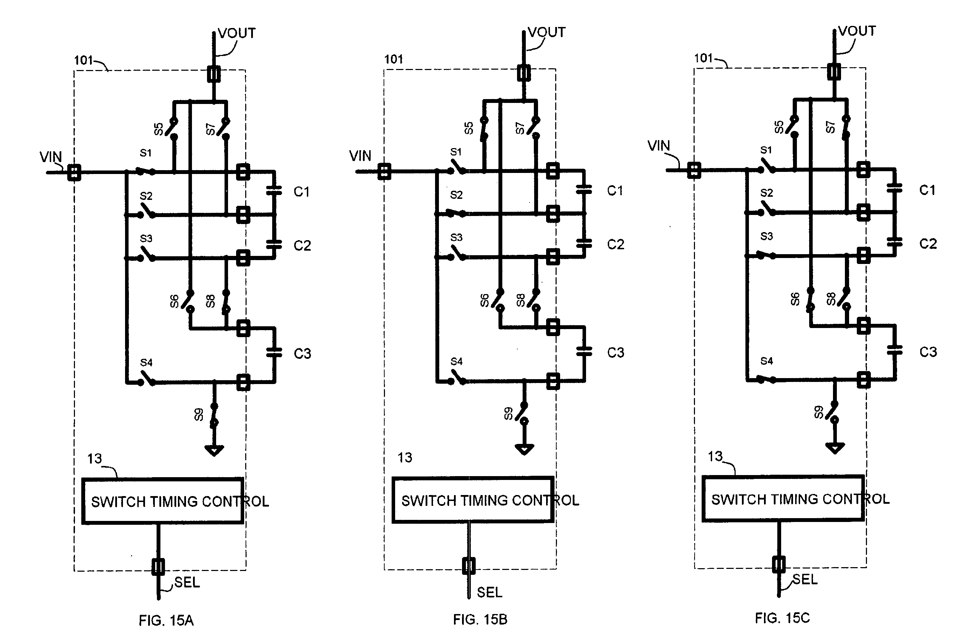

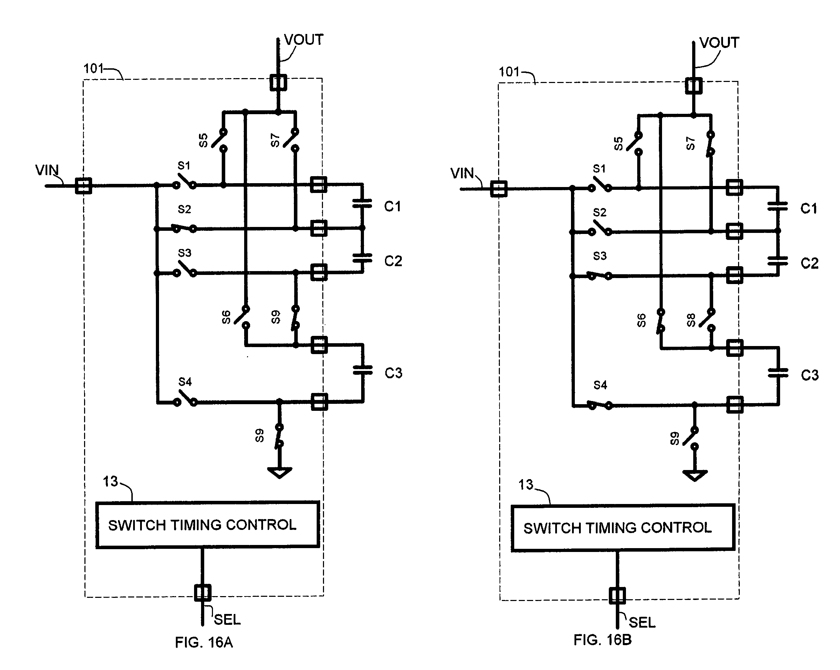

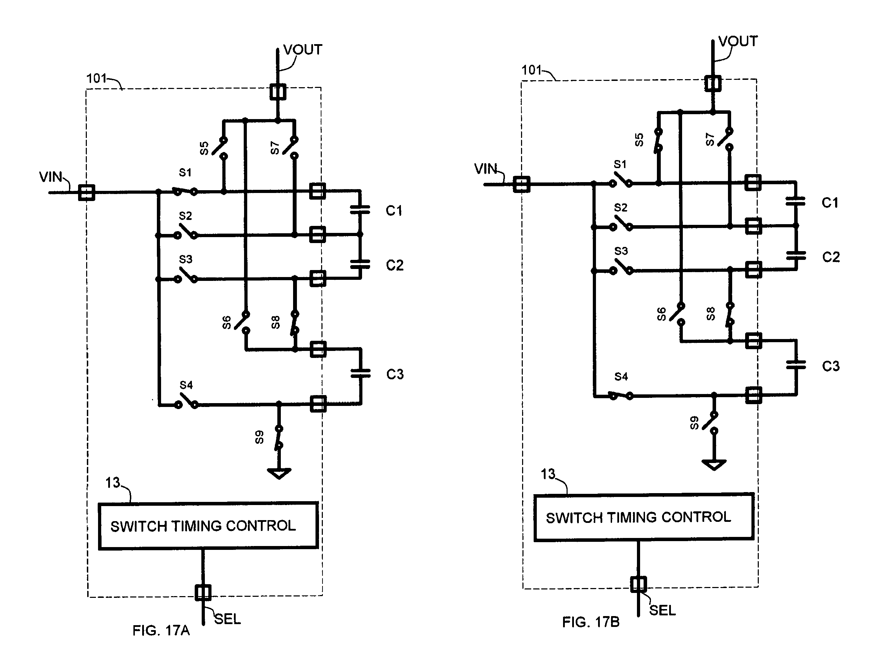

The preferred embodiments of the present invention and their advantages are best understood by referring to FIGS.1-17 of the drawings. Like numerals are used for like and corresponding parts of the various drawings.

FIG 1 illustrates a structure of a power supply 100 according to a preferred embodiment of the present invention. The power supply 100 receives an input voltage, which is a battery voltage Vin from a lithium ion battery 11, and boosts it at a charge pump circuit 101, which uses boosting capacitors C1, C2 and C3, and thereby outputs a boosted voltage Vout. LED elements 12A and 12B, together with a smoothing capacitor Cout, are connected in parallel to the output terminal of the step-up converter 100 and are grounded via current regulators 102A and 102B. A boosted voltage Vout outputted from the power supply 100 is supplied to LED elements 12A and 12B. The mode transition system 106 takes signals from the regulators 102 and the battery voltage Vin and output gain selection signal SEL to the charge pump circuit 101 such that the efficiency of the power supply is optimized.

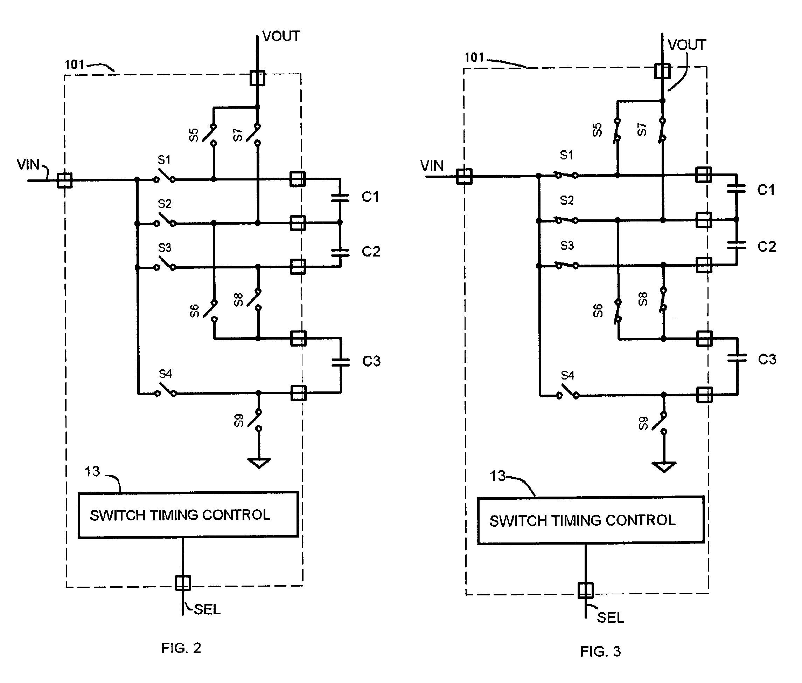

FIG. 2 illustrates a structure of a charge pump circuit 101 according to a first embodiment of the present invention. The charge pump circuit 101 boosts an input voltage Vin to an output voltage Vout by performing ON/OFF control of switches S1 to S9 according to a preset timing sequence and thereby switching both the connection mode and the timing of charging or discharging of three boosting capacitors C1, C2 and C3. The timing sequence is provided by the switch timing control sub-system 13 according to the mode selection signal SEL.

FIG. 3 illustrates ON/OFF states of switches S1 to S9 when the gain is 1. As it is shown in FIG. 3, S4 and S9 are each placed in the OFF position and the other switches in the ON position, so that the input voltage Vin is outputted just as it is as the output voltage Vout.

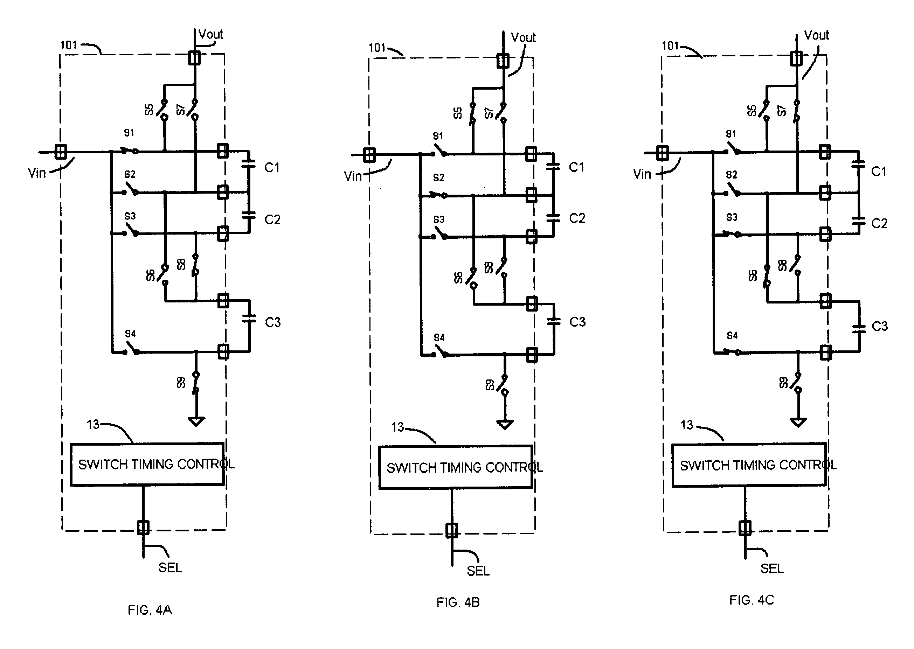

Next, the case where the gain is 4/3 times is explained below. FIG. 4A, FIG. 4B and FIG 4C illustrates ON/OFF states of switches S 1 to S9 during the charging and discharging phases.

FIG 4A illustrates ON/OFF states of switches S1 to S9 during charging phase P2/1. During the charging, the control circuit 13 places S1, S8 and S9 in the ON position and the other switches in the OFF position, so that a circuit with C1, C2 and C3 connected in series is formed and thereby C1, C2 and C2 are charged with power of the input voltage Vin. In this manner, a voltage 1/3 Vin is applied across each of the three boosting capacitors C1, C2 and C3.

FIG. 4B illustrates the ON/OFF states of S1 to S9 for the 1^{st} discharge phase P2/2. In this phase, the control circuit 13 places S2 and S5 in the ON position and the other switches in the OFF position, so that C1 is now connected in series to the input voltage Vin in the direction opposite to that for charging. Thus C1 is discharged and a power is supplied to the output terminal. In this manner, the voltage 1/3 Vin of C1 is added to Vin, so that Vout becomes 4/3 Vin. This phase lasts for the duration of T1.

FIG. 4C illustrates ON/OFF states of S1 to S9 for the 2^{nd} discharge phase P2/3. In this phase, the control circuit 13 places S3, S4, S6 and S7 in the ON position and the other switches in the OFF position, so that C2 and C3 are now connected in parallel via S6 and thereby an input voltage Vin is applied, in the direction opposite to that for charging, to the C2 and C3 charged with the voltage of 1/3 Vin. Thus C2 and C3 are discharged and a power is supplied to the output terminal. In this manner, the voltage 1/3 Vin of the two boosting capacitors C2 and C3 is added to Vin, so that Vout becomes 4/3 Vin. This phase lasts for the duration of T2=2*T1. This longer duration is needed such that the all capacitors are charged and discharged in a balanced manner.

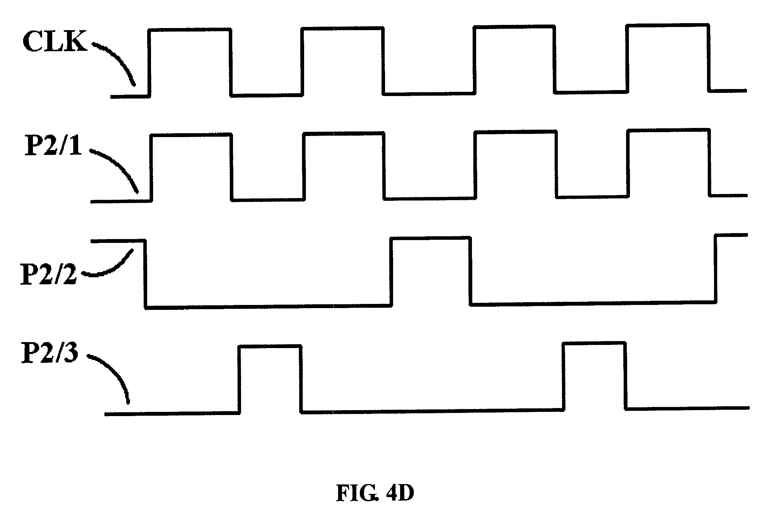

FIG 4D illustrates the repeating sequence of charging P2/1 and discharging phases P2/2 and P2/3. The charge pump circuit 101 enters the charging phase P2/1 on the 1^{st} half cycle of the signal CLK and enters the discharge phase, P2/2 or P2/3, on the 2^{nd} half cycle of the signal CLK.

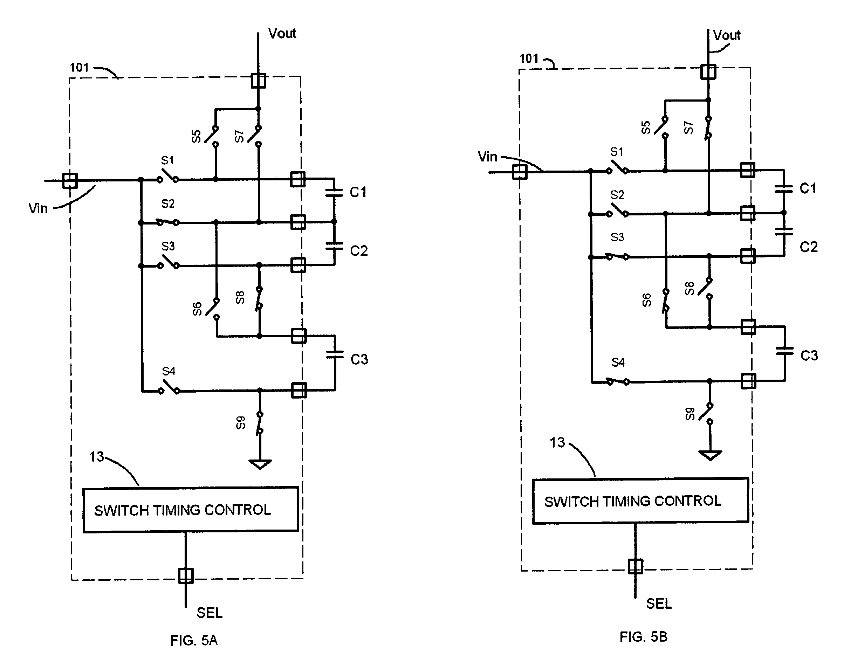

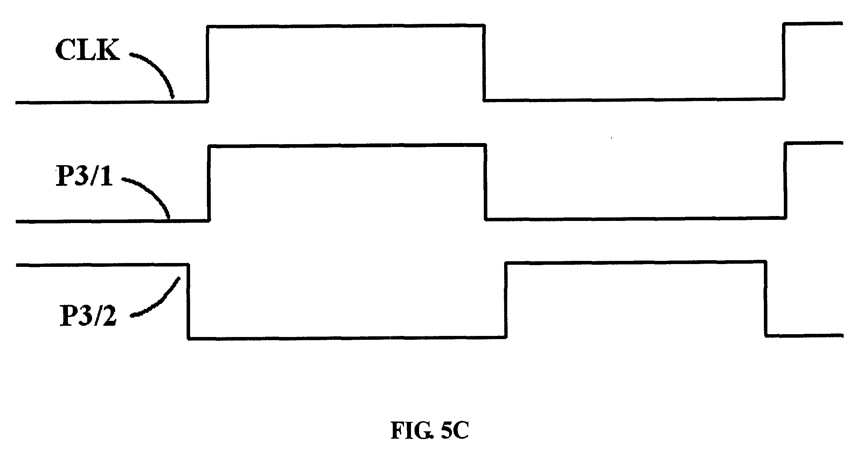

FIG. 5, FIG 6 and FIG 7 illustrate ON/OFF states of S1 and S9 and charging and discharging sequences of the charge pump circuit 101 for the gain of 3/2, 5/3 and 2 respectively. FIG. 5, FIG. 6 and FIG 7 can be analyzed and understood in the same manner as the explanation for FIG 4 above and should be obvious to those who are skilled in the art.

In all the timing diagrams, FIG 4D, FIG 5C, FIG 6E, and FIG 7C, the duration of the charge and discharge phases are not necessary identical. The designers have to choose between complexity of the Switch Timing Control unit 13 and uniform battery current.

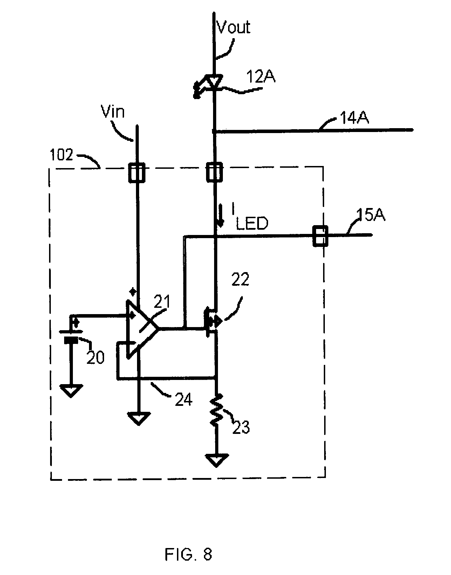

FIG 8 illustrates a structure of the current regulator 102A or 102B. A sense resistor 23 provides a voltage 24 which is proportional to the LED current I_{LED}. The voltage 24 is compared with a preset reference voltage 20. The difference is amplified by the amplifier 21 and the amplified voltage 15A drives the MOSFET 22 to adjust I_{LED} until I_{LED} equals to a preset value defined by the voltage 20 and the resistance 23. When the output voltage Vout of the charge pump 101 is lower than the necessary LED voltage to produce the desired current, the difference between the voltage 20 and the voltage 24 will be big. This big difference will drive amplifier 21 to saturation and the voltage 15A takes on a value which is close to or equal to Vin, which is the power source of the amplifier 21. When the output voltage of the charge pump 101 is higher than the needed LED voltage, the excess voltage will be dropped across the regulator 102A and appears as voltage 14A. When a charge pump gain of G1 is enough to provide the desired LED current but a bigger gain G2 is selected, the voltage 14A will be (G2-G1)*Vin greater than necessary.

Therefore, the output voltage 15A of the amplifier 21 and the signal 14A are indicative signals that the gain of charge pump is too high or too low. Signals 14B and 15B are the correspondences of 14A and 15A output by the other regulator 102B which regulate the current of the other LED 12B.

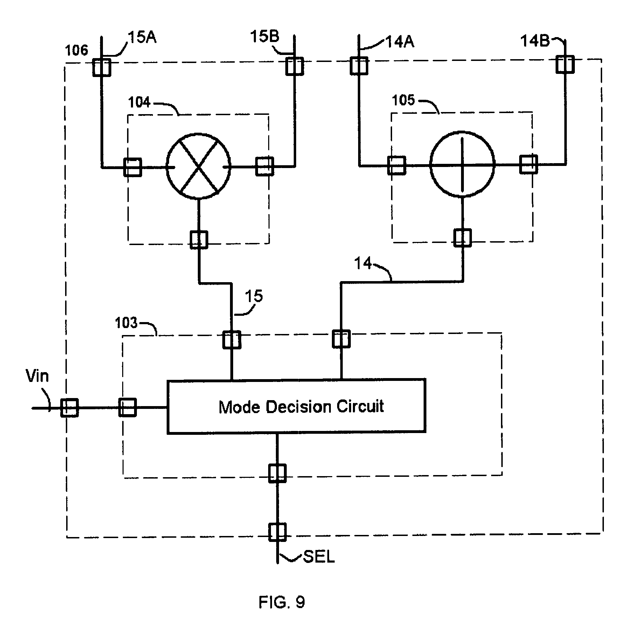

FIG 9 illustrates a structure of an automatic mode transition system 106 according to an embodiment of the present invention. It comprises an Analog-AND circuit 105 which produces a signal 15 which is the maximum of the two signals 15A and 15B. It also comprise an Analog-OR circuit 104 which produces a signal 14 which is the minimum of the two signals 14A and 14B. The signals 14 and 15 and the battery voltage Vin are used by the mode decision circuit 103 to output a signal SEL to charge pump 101 to select the necessary mode of operation.

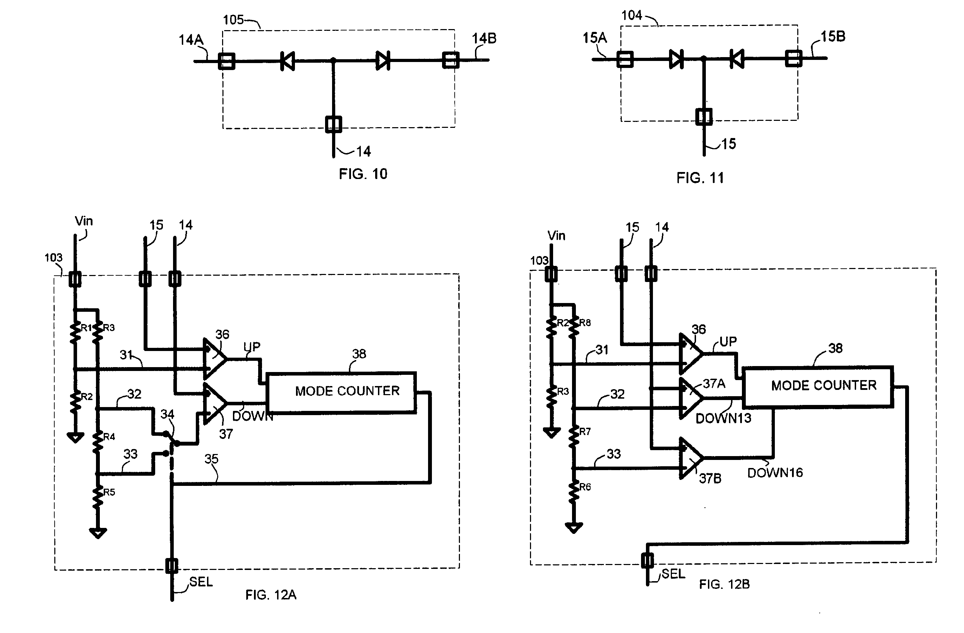

FIG 10 illustrates a structure of the Analog-AND circuit 105 according to an embodiment of the present invention. The circuit 105 inputs signal 14A and 14B from regulators 102 and outputs a signal 14. For any given threshold level, the signal 14 will be above the threshold if and only if both inputs, 14A and 14B, are above the threshold level. Therefore, signal 14 is above a threshold when voltage drops across the regulators 102A and 102B are excessive and the gain of the charge pump 101 can be reduced.

FIG 11 illustrates a structure of the Analog-OR circuit 104 according to an embodiment of the present invention. The circuit 104 inputs signal 15A and 15B from regulators 102A and 102B and then outputs a signal 15. For any given threshold level, the signal 15 will be above the threshold if either or both, 15A or 15B, is above the threshold level. Therefore, signal 15 is above a threshold when the current of any of the LED, 12A or 12B, cannot be regulated to the preset value and the gain of the charge pump 101 should be increased.

Therefore, signals 14 and 15 are indicative signals that the charge pump gain is too high, too low or sufficient. Corrective action may be performed by using these two signals.

FIG 12A illustrates a structure of the mode decision circuit 103 according to an embodiment of the present invention. The system 103 uses signals 14 and 15 to adjust the gain of the charge pump 101 such that the voltage 14 is minimum and the power loss of regulators 102A and 102B is also minimum. A comparator 36 compares the signal 15 with a voltage 31 which comes from the voltage divider formed by resistors R1 and R2. When the voltage 15 is higher than the voltage 31, it indicates the output Vout of the charge pump 101 is inadequate such that a higher gain should be chosen. A suggested R2/R1 ratio is 9. A smaller ratio may render the charge pump be switched to a higher gain sooner than necessary or impose unnecessary upper limit on the control voltage of the current regulator under normal condition.

A comparator 37 compares the voltage 14 with the voltage 35. The value of the voltage 35 depends on the gain or mode of the charge pump and the battery voltage Vin. When the charge pump 101 is using a gain of G1 and the next smaller gain is G2, the value of voltage 35 should be around (G1-G2)*Vin. This gain dependent voltage 35 is provided by the voltage divider R3, R4 and R5 and the selector 34. For the charge pump 101 in this invention, suggested values of R3, R4 and R5 are roughly R3/(R3+R4+R5)=2/3, R4/(R3+R4+R5)=1/6 and R5=R4. The resistors R3, R4 and R5 together generate the threshold voltages 32 and 33. The selector 34 connects signal 33 to signal 35, which is Vin/6, when the gain of the charge pump 101 is 3/2 or 5/3. The selector 32 connects signal 32 to signal 35, which is Vin/3, for other gain setting. The best ratios of R1, R2 and R3 are subject to the power loss of switches of the charge pump 101 and can only be determined through practical testing and simulation of the overall system.

The output of the comparator 36 is used as a signal to increase the content of mode counter 38. The output of comparator 37 is used as a signal to decrease the content of mode counter 38. The content of mode counter 38 is outputted as the gain selection signal SEL to charge pump 101 to select the necessary mode of operation.

FIG. 12B is another embodiment of the mode decision circuit 103 according to the present invention. The signals 32 and 33 are individually compared with the signal 14 to generate the signals DOWN13 and DOWN16 respectively. The mode counter 38 uses signals UP, DOWN13 and DOWN16 together to set its content and to select the appropriate charge pump gain. Other parts and signals in FIG 11B are working in a similar manner as their counterparts in 11A and is obvious to those skilled in the art.

Therefore, for all ranges of battery voltage Vin and all ranges of load current I_{LED}, the most efficient mode of operation which minimizes the power loss of the regulator is selected. While the operation of the mode transition system 103 of the present invention is described together with the charge pump 101 in this invention, the application of the mode transition system 103 is not restricted to the charge pump 101 in the present invention but is applicable to other multi mode charge pumps, e.g. a prior art charge pump with gains (1;3/2;2), after minor modification.

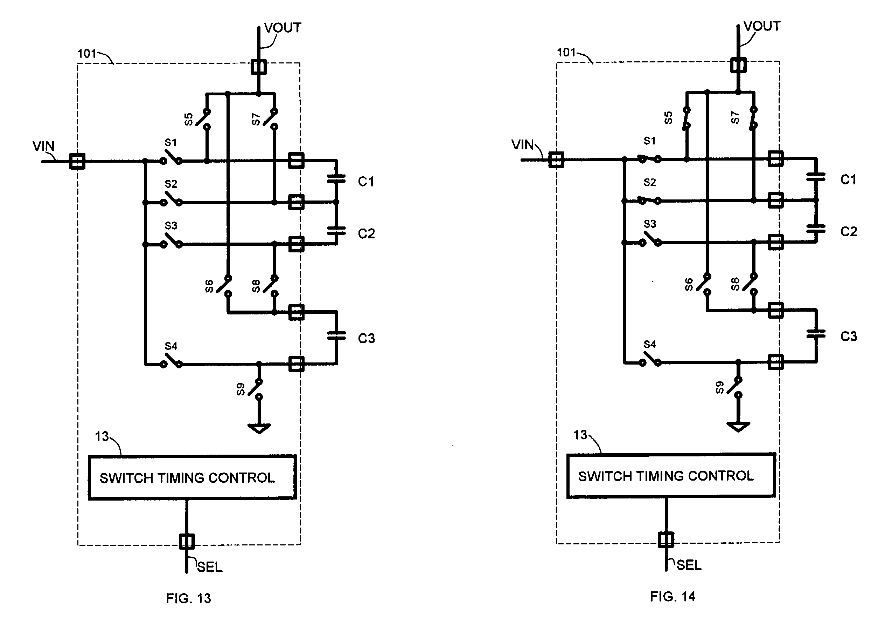

FIG. 13 illustrates a second embodiment of a charge pump circuit in FIG 1 when only the gains (1; 4/3; 3/2; 2) are needed. Switch S6 is connected between the terminal VOUT and a pin of C3. This will improve the efficiency of the charge pump circuit because the current from C3 can be passed to the output directly without passing through S7.

FIGS. 14-17 illustrate ON/OFF states of S1 and S9 and charging and discharging sequences of the charge pump circuit 101 in FIG.12 for the gain of 4/3, 3/2, and 2 respectively. FIGS. 13-16 can be analyzed and understood in the same manner as the explanation for FIG. 4 above and should be obvious to those who are skilled in the art.

The present invention has been described based on the embodiment above is only exemplary. It is therefore understood by those skilled in the art that there exists other various modifications to the combination of each component and process described above and that such modifications are also encompassed by the scope of the present invention.

Although in the present embodiments LED elements are used as an example of devices which are connected to the power supply apparatus, such a device may also be other elements or devices such as an organic electro-luminescence device and so forth.

In the present embodiments, description is given of a structure such that two LED elements are driven; the gain is selected by detecting the terminal voltages and control signals of the two current regulators. A structure may be such that more than two LED elements connected in parallel are to be driven and are grounded through multiple regulators, the gain are selected by detecting the signals of multiple regulators. A structure may also be such that only one LED element is to be driven and are grounded through a single regulator, the gain are selected by detecting the signals of a regulator and the Analog-AND and Analog-OR circuit can be spared.

Although the present invention has been described by way of exemplary embodiments, it should be understood that many changes and substitutions may further be made by those skilled in the art without departing from the scope of the present invention which is defined by the appended claims.

## Claims

1. A power supply apparatus including:
a charge pump circuit comprising multiple switches coupled to three external boosting capacitors, using five interface pins, boosts a power supply voltage at a preset gain and
outputs drive voltage of a device;
one or more than one current regulator circuits which regulate currents of one or more than one devices to a preset value and output signals which, after further processing, indicates whether the output voltage of the said charge pump is excessive, adequate or inadequate to maintain the currents of the said devices to a preset value;
a mode transition system which supplies, based on signals from the said regulators and
power supply voltage, a signal by which to adjust the gain to said charge pump circuit,
wherein said charge pump circuit including the switches, said regulator circuit, said mode transition system are monolithically integrated.

2. A power supply apparatus according to claim 1, wherein the said charge pump circuit comprising nine switches and a timing control circuit capable of controlling the switches to structure the charge pump circuit in a manner to boost a power supply voltage with gains which are switchable between 1;4/3;3/2;5/3;2.

3. A power supply apparatus according to claim 1, wherein the said mode transition system comprising an Analog-AND circuit, an Analog-OR circuit, and an mode decision circuit which inputs signal from the said regulators and the said power supply voltage and outputs signal to adjust the gain of the said charge pump circuit.

4. A power supply apparatus according to claim 3, wherein said Analog-AND circuit inputs signal from said regulators and outputs a signal which indicates all input signals are above a threshold level.

5. A power supply apparatus according to claim 3, wherein said Analog-OR circuit inputs signal from said regulators and outputs a signal which indicates at least one input signal is above a threshold level.

6. A power supply apparatus according to claim 3, wherein said mode decision circuit has multiple comparators which compare signals from the said Analog-AND and Analog-OR circuits with multiple predetermined reference signals to determine whether the output voltage of the said charge pump is excessive, adequate or inadequate to maintain the output current of the said regulator to a preset value and wherein comparators outputs signals to a mode counter to decrease, hold or increase the content of the said mode counter and wherein mode counter outputs its content to the said charge pump circuit to adjust the gain stepwise.

7. A power supply apparatus including:
a charge pump circuit comprising multiple switches coupled to three external boosting capacitors, using five interface pins, boosts a power supply voltage at a preset gain and
outputs drive voltage of a device;
one or more than one current regulator circuits which regulate currents of one or more than one devices to a preset value and output signals which, after further processing, indicates whether the output voltage of the said charge pump is excessive, adequate or inadequate to maintain the currents of the said devices to a preset value;
a mode transition system which supplies, based on signals from the said regulators and
power supply voltage, a signal by which to adjust the gain to said charge pump circuit,
wherein said charge pump circuit including the switches, said regulator circuit, said mode transition system are monolithically integrated.

8. A power supply apparatus according to claim 1, wherein the said charge pump circuit comprising nine switches and a timing control circuit capable of controlling the switches to structure the charge pump circuit in a manner to boost a power supply voltage with gains which are switchable between 1;4/3;3/2;2.

9. A power supply apparatus according to claim 1, wherein the said mode transition system comprising an Analog-AND circuit, an Analog-OR circuit, and an mode decision circuit which inputs signal from the said regulators and the said power supply voltage and outputs signal to adjust the gain of the said charge pump circuit.

10. A power supply apparatus according to claim 3, wherein said Analog-AND circuit inputs signal from said regulators and outputs a signal which indicates all input signals are above a threshold level.

11. A power supply apparatus according to claim 3, wherein said Analog-OR circuit inputs signal from said regulators and outputs a signal which indicates at least one input signal is above a threshold level.

12. A power supply apparatus according to claim 3, wherein said mode decision circuit has multiple comparators which compare signals from the said Analog-AND and Analog-OR circuits with multiple predetermined reference signals to determine whether the output voltage of the said charge pump is excessive, adequate or inadequate to maintain the output current of the said regulator to a preset value and wherein comparators outputs signals to a mode counter to decrease, hold or increase the content of the said mode counter and wherein mode counter outputs its content to the said charge pump circuit to adjust the gain stepwise.
